(19) Europäisches Patentamt
European Patent Office
Office européen des brevets

(11) EP 4 177 282 A1

(12) EUROPEAN PATENT APPLICATION

(43) Date of publication:
**10.05.2023 Bulletin 2023/19**

(21) Application number: **21306549.3**

(22) Date of filing: **04.11.2021**

(51) International Patent Classification (IPC):
***C08F 290/06*** *(2006.01)* ***C08G 18/48*** *(2006.01)*
***C08G 18/32*** *(2006.01)* ***C08G 18/67*** *(2006.01)*
***B33Y 70/00*** *(2020.01)* ***C08G 18/24*** *(2006.01)*
***C08G 18/75*** *(2006.01)* ***C08G 18/81*** *(2006.01)*
***C09D 175/16*** *(2006.01)* ***C09J 175/16*** *(2006.01)*

(52) Cooperative Patent Classification (CPC):
(C-Sets available)
**C08G 18/3206; B33Y 70/00; C08F 290/067; C08G 18/246; C08G 18/4829; C08G 18/672; C08G 18/755; C08G 18/8116; C09D 175/16; C09J 175/16;** C08G 2190/00 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
- **AMIN, Zahidul Mohammad**
  **YOKOHAMA, 240-0005 (JP)**
- **FAN, Mingxin**
  **GUANGZHOU, 510663 (CN)**

(74) Representative: **Arkema Patent**
**Arkema France**
**DRD-DPI**
**420, rue d'Estienne d'Orves**
**92705 Colombes Cedex (FR)**

# (54) POLYGLYCERIN-BASED URETHANE (METH)ACRYLATE

(57) The present invention relates to a urethane (meth)acrylate resulting from the reaction of: at least one polyglycerin polyol; at least one polyisocyanate; and at least one hydroxy-functional (meth)acrylate. The present invention further relates to a method for obtaining the urethane (meth)acrylate, to a curable composition comprising the urethane (meth)acrylate and to a cured product resulting from the curing of the urethane (meth)acrylate.

EP 4 177 282 A1

(52) Cooperative Patent Classification (CPC): (Cont.)

C-Sets
**C08F 290/067, C08F 220/58**

## Description

### Technical field

The present invention relates to a urethane (meth)acrylate resulting from the reaction of: at least one polyglycerin polyol; at least one polyisocyanate; and at least one hydroxy-functional (meth)acrylate.

The present invention further relates to a method for obtaining the urethane (meth)acrylate, to a curable composition comprising the urethane (meth)acrylate and to a cured product resulting from the curing of the urethane (meth)acrylate.

### Technical background

(Meth)acrylate-functionalized urethane oligomers have been found to be useful components of compositions capable of being cured (polymerized) using UV irradiation or other methods to form cured compositions which function as coatings, adhesives, sealants, additive manufacturing resins, molding resins and the like. However, the hydrophobic nature of these materials makes them difficult to formulate with other ingredients (e.g., tackifiers, acrylate monomers, photoinitiators, etc.), which limits their applications.

Thus, the demand for hydrophilic or water soluble materials is continuously increasing for various applications such as coatings, medical uses, automotive and 3D printing. More particularly, currently available energy curing materials lack the balanced properties of water solubility and toughness. In addition, most of the materials are either monomers or emulsion type polymers which makes it difficult to use in various energy curing systems.

Furthermore, due to their high viscosity, urethane (meth)acrylate oligomers or polymers having good hydrophilic properties along with good mechanical properties and high reactivity are not available in the market.

Document JP 2018178071 A relates to an active energy ray-curable resin composition capable of giving a cured product presenting high surface hardness and low curling properties. Said ray-curable resin composition comprises a (meth)acrylate of a polyglycerol alkylene oxide adduct and a (meth)acrylate having three or more (meth)acryloyl groups.

Document JP 2016186034 A relates to an active energy ray-curable coating resin composition leading to a cured film surface that is hydrophilic, has good antifogging properties and has a sufficient surface hardness. Such active energy ray-curable coating resin composition comprises a polyglycerol ethylene oxide modified (meth)acrylation product, and a phosphate ester compound having an ethylene oxide group.

Document EP 2013302 B1 relates to a radiation-curable aqueous composition comprising an ethylenically unsaturated polyurethane pre-polymer obtained from the reaction of a polyisocyanate, a high molecular weight polyol, at least one hydrophilic compound containing at least one reactive group capable to react with isocyanate groups and which is capable to render the polyurethane pre-polymer dispersible in aqueous medium either directly or after the reaction with a neutralizing agent to provide a salt, an ethylenically unsaturated compound containing at least two reactive groups capable to react with isocyanate groups and an ethylenically unsaturated compound containing essentially one reactive group capable to react with isocyanate groups.

Document US 2004/259970 A1 relates to a waterborne, UV-curable polyurethane emulsion and its use in producing soft touch coatings. The emulsion is prepared by reacting specified hydroxy-functional components with di- and/or polyisocyanates, forming a dispersion of the resultant product with water and reacting the dispersion with amine functional materials.

There is thus a need for curable urethane (meth)acrylate polymer compositions that present high hydrophilicity and good mechanical properties or elongation.

### Summary of the invention

It is a first object of the invention to provide a urethane (meth)acrylate resulting from the reaction of:

- at least one polyglycerin polyol;
- at least one polyisocyanate; and
- at least one hydroxy-functional (meth)acrylate.

According to some embodiments, the urethane (meth)acrylate has a number average molecular weight from 1,000 to 50,000 g/mol, preferably from 1,500 to 10,000 g/mol, more preferably from 2,000 to 5,000 g/mol.

According to some embodiments, the urethane (meth)acrylate has residual hydroxy groups.

According to some embodiments, the urethane (meth)acrylate is devoid of hydroxy groups.

According to some embodiments, the polyglycerin polyol is free of oxyethylene and/or oxypropylene groups, preferably free of oxyalkylene groups.

According to some embodiments, the polyglycerin polyol has a number average molecular weight of at least 100 g/mol, preferably from 100 to 10,000 g/mol, and more preferably from 200 to 500 g/mol.
According to some embodiments, the polyglycerin polyol has the following general formula (I):

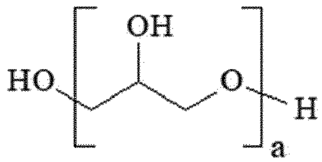
(I)

wherein a is a number from 2 to 20, preferably from 2 to 10.
According to some embodiments, the polyisocyanate is a diisocyanate preferably chosen from an aliphatic, a cycloaliphatic, or an aromatic diisocyanate, preferably a cycloaliphatic diisocyanate, and more preferably the polyisocyanate is isophorone diisocyanate.
According to some embodiments, the hydroxy-functional (meth)acrylate is chosen from a hydroxyalkyl (meth)acrylate and a polyethylene glycol mono(meth)acrylate, preferably 2-hydroxyethyl (meth)acrylate or a polyethylene glycol mono(meth)acrylate comprising 2 to 20, preferably 5 to 10, ethylene glycol units.
According to some embodiments, the urethane (meth)acrylate has the following general formula (III):

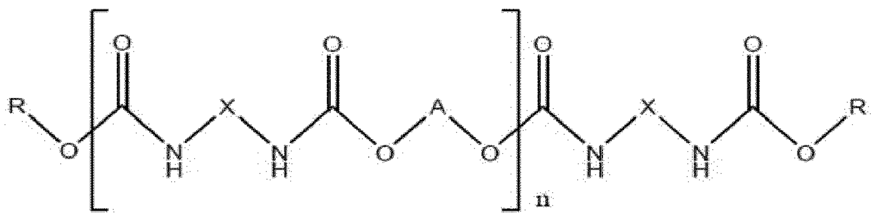
(III)

wherein:

- R is a unit deriving from the hydroxy-functional (meth)acrylate, preferably R has the following general formula (IV):

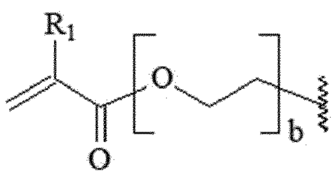
(IV)

wherein:

- $R_1$ is chosen from a hydrogen atom and a methyl group; and
- b is a number from 1 to 30, preferably from 1 to 10;

- X is a unit deriving from the polyisocyanate, said unit being optionally substituted by a urethane acrylate group if the polyisocyanate has a NCO functionality that is higher than 2;
- A is a unit deriving from the polyglycerin polyol, preferably A has the following general formula (V):

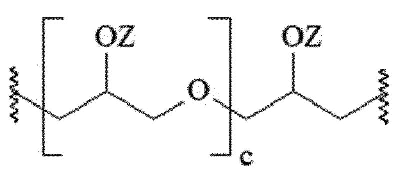
(V)

wherein:

- each Z is independently chosen from a hydrogen atom or the group -C(=O)-NH-X-NH-C(=O)-OR; and
- c is a number from 1 to 19, preferably from 1 to 9;

- n is a number from 1 to 30.

When X is a unit deriving from a polyisocyanate having a NCO functionality that is higher than 2, X may be substituted by a urethane (meth)acrylate group comprising at least one urethane bond and at least one (meth)acrylate group, for example X may be substituted with a urethane (meth)acrylate group of formula -NH-C(=O)-OR, wherein R is as defined above.

According to some embodiments, the urethane (meth)acrylate has an OH value from 50 mg KOH/g to 400 mg KOH/g, preferably from 100 mg KOH/g to 200 mg KOH/g.

According to some embodiments, the ratio $R^1$ of the polyisocyanate to the hydroxy-functional (meth)acrylate is from 0.2 to 0.9, preferably from 0.5 to 0.8 and/or the ratio $R^2$ of the polyglycerin polyol to the polyisocyanate is from 0.1 to 0.8, preferably from 0.2 to 0.5.

The present invention also relates to a method for obtaining a urethane (meth)acrylate comprising the successive following steps of:

- reacting a polyisocyanate with a hydroxy-functional (meth)acrylate to form an isocyanate-functional adduct; and
- reacting the isocyanate-functional adduct with a polyglycerin polyol to obtain a urethane (meth)acrylate.

The present invention also relates to a urethane (meth)acrylate obtained by the above method.

The present invention also relates to a curable composition comprising:

- the urethane (meth)acrylate described above;
- an ethylenically unsaturated compound chosen from an ethylenically unsaturated monomer or an ethylenically unsaturated oligomer, wherein the ethylenically unsaturated compound is preferably chosen from a mono- or multi-functional (meth)acrylic monomer or oligomer, more preferably chosen from acryloyl morpholine and polyethylene glycol di(meth)acrylate.

According to some embodiments, the ethylenically unsaturated compound is present at an amount of at least 5% by weight, preferably from 5 to 99% by weight, more preferably from 10 to 50% by weight and even more preferably from 15 to 35% by weight, relative to the total weight of the curable composition.

The present invention also relates to a cured product resulting from the curing of a urethane (meth)acrylate described above, or from the curing of a curable composition described above.

The present invention enables to meet the abovementioned need. In particular, the invention provides curable urethane (meth)acrylate polymer compositions that present high hydrophilicity and good mechanical properties.

This is achieved by the urethane (meth)acrylate according to the present invention. More particularly, the presence of polyglycerin polyol makes it possible to obtain products which, have high hydrophilicity, high reactivity and good mechanical properties. In addition, the viscosity of the urethane (meth)acrylate of the present invention may be controlled by optimizing the equivalent ratio of the polyisocyanate to the polyglycerin polyol.

## Detailed description

The invention will now be described in more detail without limitation in the following description.

### Urethane (meth)acrylate

The present invention relates to a urethane (meth)acrylate resulting from the reaction of:

- at least one polyglycerin polyol;
- at least one polyisocyanate; and
- at least one hydroxy-functional (meth)acrylate.

The term "urethane (meth)acrylate" refers to a compound comprising at least one urethane bond and at least one (meth)acrylate functional group. Such compounds may also be referred to as urethane (meth)acrylate oligomers. By "urethane bond" is meant a -NH-C(=O)-O- or a -O-C(=O)-NH- bond. The term "(meth)acrylate functional group" refers

to either an acrylate functional group ($-O-C(=O)-CH=CH_2$) or a methacrylate functional group ($-O-C(=O)-C(CH_3)=CH_2$).

The urethane (meth)acrylate according to the invention is the reaction product of the above mentioned compounds. The urethane (meth)acrylate according to the invention may be a mixture of urethane (meth)acrylates.

The urethane (meth)acrylate according to the invention is based on a polyglycerin polyol, in other words it comprises one or more units deriving from a polyglycerin polyol. The urethane (meth)acrylate according to the invention may be based on a mixture of polyglycerin polyols.

By "polyglycerin polyol" or "polyglycerin" is meant the polymerized product of glycerol, in other words, a molecule comprising repeating units deriving from glycerol.

According to some embodiments, the hydroxy groups of the polyglycerin polyol are not substituted (free hydroxy groups). By « hydroxy group » is meant a -OH group. Notably, the polyglycerin polyol may be free of oxyethylene and/or oxypropylene groups, preferably free of oxyalkylene groups. In other words, the polyglycerin glycol is preferably not ethoxylated and/or propoxylated, even more preferably not alkoxylated.

According to preferred embodiments, the polyglycerin polyol may have the following general formula (I):

(I) 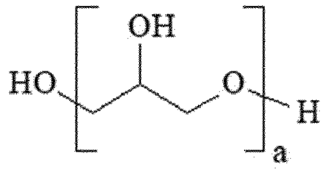

wherein a is a number from 2 to 20, preferably from 2 to 10.

The weight content of polyglycerin polyol units in the urethane (meth)acrylate may be from 1 to 50% by weight, preferably from 2 to 40% by weight, more preferably from 4 to 30% by weight, relative to the total weight of the urethane (meth)acrylate.

In one embodiment, the weight content of polyglycerin polyol units in the urethane (meth)acrylate may be from 4 to 25%, from 4 to 20% by weight, from 4 to 15% or from 4 to 10%, by weight relative to the total weight of the urethane (meth)acrylate.

In another embodiment, the weight content of polyglycerin polyol units in the urethane (meth)acrylate may be from 5 to 25%, from 10 to 25% by weight, from 15 to 25% or from 20 to 25%, by weight relative to the total weight of the urethane (meth)acrylate.

The weight content of polyglycerin polyol units (% PG) in the urethane (meth)acrylate may be determined with the following equation:

$$\% PG = \frac{m_{polyglycerin}}{m_{polyglycerin} + m_{polyisocyanate} + m_{acrylate}} \times 100$$

wherein:

$m_{polyglycerin}$ is the weight of polyglycerin polyol used to prepare the urethane (meth)acrylate in grams;
$m_{polyisocyanate}$ is the weight of polyisocyanate used to prepare the urethane (meth)acrylate in grams;
$m_{acrylate}$ is the weight of hydroxy-functional (meth)acrylate used to prepare the urethane (meth)acrylate in grams.

According to some embodiments, the polyglycerin polyol may have a number average molecular weight of at least 100 g/mol, preferably from 100 to 10,000 g/mol, and more preferably from 200 to 500 g/mol. For example, the polyglycerin polyol may have a number average molecular weight from 100 to 200 g/mol; or from 200 to 400 g/mol; or from 400 to 600 g/mol; or from 600 to 800 g/mol; or from 800 to 1,000 g/mol; or from 1,000 to 1,500 g/mol; or from 1,500 to 2,000 g/mol; or from 2,000 to 2,500 g/mol; or from 2,500 to 3,000 g/mol; or from 3,000 to 3,500 g/mol; or from 3,500 to 4,000 g/mol; or from 4,000 to 4,500 g/mol; or from 4,500 to 5,000 g/mol; or from 5,000 to 5,500 g/mol; or from 5,500 to 6,000 g/mol; or from 6,000 to 6,500 g/mol; or from 6,500 to 7,000 g/mol; or from 7,000 to 7,500 g/mol; or from 7,500 to 8,000 g/mol; or from 8,000 to 8,500 g/mol; or from 8,500 to 9,000 g/mol; or from 9,000 to 9,500 g/mol; or from 9,500 to 10,000 g/mol; or higher than 10,000 g/mol.

The number average molecular weight may be determined with the following equation:

$$Mw = (56100 \times F)/OHV$$

wherein :

F is the hydroxyl functionality of the polyglycerin polyol;
OHV is the hydroxyl value (in mg KOH/g) of the polyglycerin polyol.

The urethane (meth)acrylate according to the invention is based on a polyisocyanate, in other words it comprises one or more units deriving from a polyisocyanate. The urethane (meth)acrylate according to the invention may be based on a mixture of polyisocyanates.

By "polyisocyanate" is meant a compound having at least two -N=C=O groups. Thus, by *"diisocyanate"* is meant a compound having two -N=C=O groups.

Regarding the polyisocyanate, this compound may be chosen from aliphatic, cycloaliphatic and aromatic polyisocyanates and combinations thereof, more preferably from aliphatic and cycloaliphatic polyisocyanates and combinations thereof, and even more preferably the polyisocyanate may be a cycloaliphatic polyisocyanate.

According to preferred embodiments, the polyisocyanate is a diisocyanate compound or a mixture of diisocyanate compounds.

According to certain embodiments of the invention, the diisocyanate may be represented by the following general formula (II):

(II) OCN-X-NCO

wherein X is a divalent organo moiety, such as a divalent hydrocarbon moiety. The divalent hydrocarbon moiety may be aliphatic (such as a linear, branched or cyclic aliphatic moiety), aromatic or araliphatic, for example. It is also possible for the divalent organo moiety to contain one or more heteroatoms, such as N, O or halogen, in addition to carbon and hydrogen atoms.

Cycloaliphatic diisocyanates such as 3-isocyanatomethyl-3,5,5-trimethylcyclohexyl isocyanate (also referred to as isophorone diisocyanate or IPDI) may be utilized. Other suitable polyisocyanates may include, without limitation, toluene diisocyanates (TDI), diphenylmethanediisocyanates, dicyclohexyldiisocyanates, tetramethyl xylene diisocyanates, hydrogenated tetramethyl xylene diisocyanates, hexamethylene diisocyanate (HDI), norborane diisocyanate (NBDI), trimethylenehexamethylene diisocyanates, naphthylene diisocyanates and the like (including isocyanate functional biurets thereof, allophonates thereof and isocyanurates thereof). Mixtures of different polyisocyanates may be employed.

The weight content of polyisocyanate units in the urethane (meth)acrylate may be from 10 to 70% by weight, preferably from 15 to 65% by weight, more preferably from 20 to 60% by weight, relative to the total weight of the urethane (meth)acrylate.

In one embodiment, the weight content of polyisocyanate units in the urethane (meth)acrylate may be from 20 to 55%, from 20 to 50% by weight, from 20 to 45% from 20 to 40%, or from 20 to 35%, by weight relative to the total weight of the urethane (meth)acrylate.

In another embodiment, the weight content of polyisocyanate units in the urethane (meth)acrylate may be from 25 to 60%, from 30 to 60% by weight, from 35 to 60% from 40 to 60%, or from 45 to 60%, by weight relative to the total weight of the urethane (meth)acrylate.

The weight content of polyisocyanate units (% PI) in the urethane (meth)acrylate may be determined with the following equation:

$$\% PI = \frac{m_{polyisocyanate}}{m_{polyglycerin} + m_{polyisocyanate} + m_{acrylate}} \times 100$$

wherein:

$m_{polyglycerin}$ is the weight of polyglycerin polyol used to prepare the urethane (meth)acrylate in grams;
$m_{polyisocyanate}$ is the weight of polyisocyanate used to prepare the urethane (meth)acrylate in grams;
$m_{acrylate}$ is the weight of hydroxy-functional (meth)acrylate used to prepare the urethane (meth)acrylate in grams.

The urethane (meth)acrylate according to the invention is based on a hydroxy-functional (meth)acrylate, in other words it comprises one or more units deriving from a hydroxy-functional (meth)acrylate. The urethane (meth)acrylate according to the invention may be based on a mixture of hydroxy-functional (meth)acrylates.

By *"hydroxy-functional (meth)acrylate"* is meant a compound comprising at least one hydroxy group and at least one (meth)acrylate group (corresponding to the structure $-O-C(=O)-CH=CH_2$ or $-O-C(=O)-C(CH_3)=CH_2$).

According to preferred embodiments, the hydroxy-functional (meth)acrylate has a (meth)acrylate functionality (acrylate and/or methacrylate functionality) ranging from 1 to 5 (i.e., contains 1 to 5 (meth)acrylate functional groups per molecule).

According to some embodiments, the hydroxy-functional (meth)acrylate may preferably have a hydroxyl functionality of 1.

Alternatively, the hydroxy-functional (meth)acrylate may have a hydroxyl functionality of 2 or higher (i.e., contains two or more hydroxyl groups per molecule).

The hydroxy-functional (meth)acrylate may be chosen from hydroxyalkyl (meth)acrylates and alkoxylated hydroxyalkyl (meth)acrylates.

Suitable hydroxyalkyl (meth)acrylates include esters of acrylic and methacrylic acid wherein the acid is esterified to provide a hydroxyalkyl group. The alkyl group may be, for example, a branched or straight chain $C_2$ to $C_{10}$ alkyl group such as ethyl, propyl, butyl, pentyl, hexyl, octyl, nonyl or decyl. The hydroxy group may be at the terminal position of the alkyl group or along the chain of the alkyl group, with the hydroxy group preferably being primary or secondary. The alkyl group optionally may be substituted with aromatic groups, halogen, etc. More than one hydroxy group may be present on the alkyl group (for example, as in glycerin mono(meth)acrylate). As mentioned above, the hydroxyalkyl (meth)acrylate may contain one, two or more (meth)acrylate groups per molecule. Examples of hydroxyalkyl (meth)acrylates useful in the present invention include, without limitation, 2-hydroxyethyl acrylate (HEA), 2-hydroxyethyl methacrylate (HEMA), 2-hydroxypropyl acrylate, 2-hydroxypropyl methacrylate, 3-hydroxypropyl (meth)acrylate, 2-hydroxybutyl (meth)acrylate, 3-hydroxybutyl (meth)acrylate, 4-hydroxybutyl (meth)acrylate, 2-hydroxy-3-phenoxypropyl (meth)acrylate, 3-chloro-2-hydroxypropyl (meth)acrylate, glycerin mono- and di(meth)acrylate, 2-hydroxy-1-acryloxy-3-(meth)acryloxypropane, trimethylolpropane mono- and di(meth)acrylate, di(trimethylolpropane) mono-, di- and tri(meth)acrylate, trimethylolethane mono-and di(meth)acrylate, pentaerythritol mono-, di- and tri(meth)acrylate, dipentaerythritol mono-, di-, tri-, tetra- and penta(meth)acrylate and the like and combinations thereof.

Suitable alkoxylated hydroxyalkyl (meth)acrylates include, but are not limited to, diethylene glycol mono(meth)acrylate, polyethylene glycol mono(meth)acrylates, dipropylene glycol mono(meth)acrylate, polypropylene glycol mono(meth)acrylates, mixed ethylene/propylene polyols which are monoesterified with a (meth)acrylate group, di(tetramethylene) glycol mono(meth)acrylate, polytetramethylene glycol mono(meth)acrylates and the like and combinations thereof. A preferred alkoxylated hydroxyalkyl (meth)acrylate is a polyethylene glycol mono(meth)acrylate comprising 2 to 20, preferably 5 to 10, ethylene glycol units.

Suitable hydroxyl-functional epoxy (meth)acrylates include, but are not limited to, monomeric and oligomeric compounds obtainable by reaction of an epoxy compound (such as an epoxy resin, e.g., a bisphenol A resin) with (meth)acrylic acid wherein ring-opening of the epoxy group by the (meth)acrylic acid introduces both hydroxyl and (meth)acrylate functionality. Examples of suitable commercially available hydroxyl-functional epoxy (meth)acrylates include the CN132 and CN116 products sold by Sartomer (division of Arkema), which are aliphatic epoxy acrylates having both methacrylate functionality and secondary hydroxyl functionality due to ring-opening of an epoxy group.

Suitable hydroxyl-functional polyester (meth)acrylates include, but are not limited to, mono(meth)acrylate esters of polyester polyols, wherein the polyester polyols are the condensation polymerization reaction products of diacids and diols.

Mixtures or combinations of different hydroxyl-functional (meth)acrylates may be utilized to form the urethane (meth)acrylate according to the present invention.

The weight content of hydroxy-functional (meth)acrylate units in the urethane (meth)acrylate may be from 20 to 80% by weight, preferably from 25 to 75% by weight, more preferably from 30 to 75% by weight, relative to the total weight of the urethane (meth)acrylate.

In one embodiment, the weight content of hydroxy-functional (meth)acrylate units in the urethane (meth)acrylate may be from 30 to 55%, from 30 to 50% by weight, from 30 to 45% from 30 to 40%, or from 30 to 35%, by weight relative to the total weight of the urethane (meth)acrylate.

In another embodiment, the weight content of hydroxy-functional (meth)acrylate units in the urethane (meth)acrylate may be from 35 to 75%, from 40 to 75% by weight, from 45 to 75% from 50 to 75%, or from 55 to 75%, by weight relative to the total weight of the urethane (meth)acrylate.

The weight content of hydroxy-functional (meth)acrylate units (% HF) in the urethane (meth)acrylate may be determined with the following equation:

$$\% HF = \frac{m_{acrylate}}{m_{polyglycerin} + m_{polyisocyanate} + m_{acrylate}} \times 100$$

wherein:

$m_{polyglycerin}$ is the weight of polyglycerin polyol used to prepare the urethane (meth)acrylate in grams;
$m_{polyisocyanate}$ is the weight of polyisocyanate used to prepare the urethane (meth)acrylate in grams;
$m_{acrylate}$ is the weight of hydroxy-functional (meth)acrylate used to prepare the urethane (meth)acrylate in grams.

As mentioned above, the urethane (meth)acrylate according to the invention is the reaction product of the above mentioned compounds.

The urethane (meth)acrylate may have a backbone comprised of units deriving from the polyglycerin polyol and units deriving from the polyisocyanate. Such units may be alternating. Thus, the hydroxy groups of the polyglycerin polyol may react with the isocyanate group of the polyisocyanate to form a urethane linkage. Therefore, the isocyanate deriving units may be positioned between and link together polyglycerin polyol units. Furthermore, the extremities of such product may comprise units deriving from the hydroxy-functional (meth)acrylate. In other words, such extremities may be formed after the reaction of the isocyanate group of the polyisocyanate and the hydroxy group of the hydroxy-functional (meth)acrylate to form a urethane linkage.

According to preferred embodiments, the urethane (meth)acrylate essentially consists of, or consists of units deriving from the polyisocyanate, units deriving from the polyglycerin polyol and units deriving from the hydroxy-functional (meth)acrylate.

The urethane (meth)acrylate according to the present invention may have a number average molecular weight from 1,000 to 50,000 g/mol, preferably from 1,500 to 10,000 g/mol, more preferably from 2,000 to 5,000 g/mol. For example such number average molecular weight may be from 1,000 to 5,000 g/mol; or from 5,000 to 10,000 g/mol; or from 10,000 to 15,000 g/mol; or from 15,000 to 20,000 g/mol; or from 20,000 to 25,000 g/mol; or from 25,000 to 30,000 g/mol; or from 30,000 to 35,000 g/mol; or from 35,000 to 40,000 g/mol; or from 40,000 to 45,000 g/mol; or from 45,000 to 50,000 g/mol. The number average molecular weight may be determined by gel permeation chromatography (GPC) using polystyrene standards.

According to some embodiments, the urethane (meth)acrylate according to the present invention may have a linear structure. This is for example the case when the urethane (meth)acrylate comprises residual hydroxy groups. In other words, the secondary hydroxy group present in the polyglycerin glycol has not reacted with a polyisocyanate.

According to other embodiments, urethane (meth)acrylate according to the present invention may have a branched structure. In this case, the secondary hydroxy group of the polyglycerin polyol has reacted with a polyisocyanate. Thus, in this case, the urethane (meth)acrylate may be devoid of hydroxy groups.

The water tolerance and water solubility of the urethane (meth)acrylate is higher when the secondary hydroxy group present in the polyglycerin glycol has not reacted with a polyisocyanate. Reaction of the secondary hydroxy group present in the polyglycerin glycol with a polyisocyanate may be controlled by the reaction temperature (for example, at a low temperature the reaction of the secondary hydroxy group with the polyisocyanate may be avoided) and addition speed of the polyglycerin polyol during the reaction.

The urethane (meth)acrylate reaction product may have an OH value from 50 mg KOH/g to 400 mg KOH/g, preferably or from 100 mg KOH/g to 200 mg KOH/g. The OH value of the urethane (meth)acrylate may be determined with a titrimetric method. The procedure involves the quantitative reaction of the hydroxyl groups of the urethane (meth)acrylate with an excess of p-toluenesulfonyl isocyanate (TSI) to form an acidic carbamate. Water is added at the end of the reaction to convert unreacted isocyanate to sulfonamide. The carbamate is titrated potentiometrically with t-butylammonium hydroxide in an essentially non-aqueous medium. The titrimetric method may be as described in ASTM E1899 - 16.

The urethane (meth)acrylate reaction product preferably has the following general formula (III):

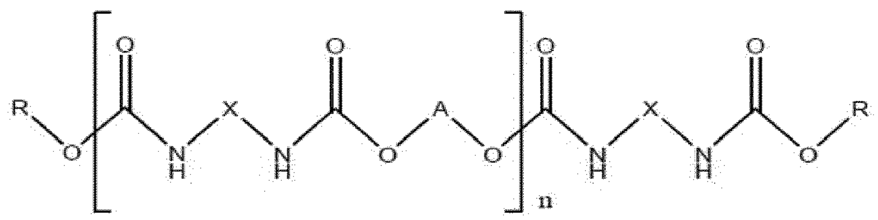

(III)

In this formula X is a unit deriving from the polyisocyanate. X is as defined above.

R is a unit deriving from the hydroxy-functional (meth)acrylate (such compound having been described above). Preferably, R may have the following general formula (IV):

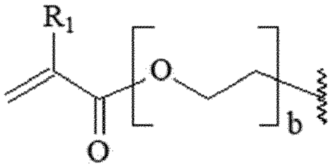

(IV)

In this formula, $R_1$ is chosen from a hydrogen atom and a methyl group. In addition, b is a number from 1 to 30, preferably from 1 to 10.

Furthermore, A is a unit deriving from the polyglycerin polyol (such compound also having been described above). Preferably, A may have the following general formula (V):

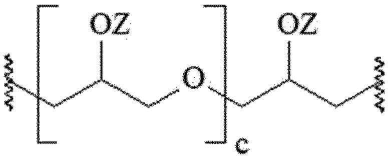

(V)

In this formula, each Z is independently chosen from a hydrogen atom or the group -C(=O)-NH-X-NH-C(=O)-OR.

c is a number from 1 to 19, preferably from 1 to 9.

Finally in formula (III), n is a number from 1 to 30.

<u>Method for obtaining the urethane (meth)acrylate</u>

The present invention further relates to a method for obtaining a urethane (meth)acrylate. According to preferred embodiments, such method is implemented to obtain the urethane (meth)acrylate described above.

Such method comprises a first step of reacting a polyisocyanate with a hydroxy-functional (meth)acrylate to form an isocyanate-functional adduct.

The polyisocyanate and the hydroxy-functional (meth)acrylate may be as described above.

By "isocyanate-functional adduct" is meant the product of an polyaddition reaction between the polyisocyanate and the hydroxy-functional (meth)acrylate.

Such step may for example be carried out in a reactor.

The ratio $R^1$ of the polyisocyanate to the hydroxy-functional (meth)acrylate may be from 0.2 to 0.9, preferably from 0.5 to 0.8.

The above ratio $R^1$ may be calculated with the following equation:

$$R^1 = \frac{n_{acrylate}}{n_{polyisocyanate}}$$

wherein:

$n_{acrylate}$ is the number of moles of OH groups in the hydroxy-functional (meth)acrylate used to prepare the urethane (meth)acrylate;

$n_{polyisocyanate}$ is the number of moles of NCO groups in the polyisocyanate used to prepare the urethane (meth)acrylate.

The number of moles $n_{acrylate}$ and $n_{polyisocyanate}$ may be calculated with the following equation:

$$n_{acrylate} = \frac{m_{acrylate} \times f_{acrylate}}{Mw_{acrylate}}$$

wherein:

$m_{acrylate}$ is the weight of hydroxy-functional (meth)acrylate used to prepare the urethane (meth)acrylate in grams;
$Mw_{acrylate}$ is the molecular weight of the hydroxy-functional (meth)acrylate in g/mol; and
$f_{acrylate}$ is the number of OH groups in the hydroxy-functional (meth)acrylate.

$$n_{polyisocyanate} = \frac{m_{polyisocyanate} \times f_{polyisocyanate}}{Mw_{polyisocyanate}}$$

wherein:

$m_{polyisocyanate}$ is the weight of polyisocyanate used to prepare the urethane (meth)acrylate in grams;
$Mw_{polyisocyanate}$ is the molecular weight of the polyisocyanate in g/mol; and $f_{polyisocyanate}$ is the number of NCO groups in the polyisocyanate.

According to some embodiments, the formation of the isocyanate-functional adduct may be carried out without the use of a catalyst.

According to other embodiments, the formation of the isocyanate-functional adduct may be carried out in the presence of a catalyst called urethane catalyst. As used herein, a *"urethane catalyst"* means a substance which is capable of catalyzing the reaction between a hydroxyl group and an isocyanate group to form a urethane linkage. Thus, a urethane catalyst may accelerate the rate at which such reaction takes place at a given temperature and/or achieve a target degree of completion of such reaction at a temperature which is lower than the temperature at which the target degree of completion is achieved in the absence of any urethane catalyst.

Any of the tin-based urethane catalysts known in the art may be utilized (e.g., dibutyltin dilaurate). However, according to certain embodiments, a non-tin urethane catalyst or a combination of non-tin urethane catalysts is used.

Suitable non-tin urethane catalysts include, for example, one or more non-tin urethane catalysts selected from the group consisting of carboxylate complexes of bismuth (such as bismuth octoate); acetylacetonate complexes of zirconium; acetylacetonate complexes of hafnium; acetylacetonate complexes of titanium; beta-diketiminate complexes of zirconium; beta-diketiminate complexes of hafnium; beta-diketiminate complexes of titanium; amidinate complexes of zirconium; amidinate complexes of hafnium; amidinate complexes of titanium; carboxylate complexes of zinc; tertiary amines; imidazoles; N-heterocyclic carbenes; tetraalkylammonium (pseudo)halides; phosphines; and combinations thereof.

Typically, a urethane catalyst may be utilized in an amount which is from 0.0001 to 0.1% by weight, based on the total weight of the urethane (meth)acrylate.

Such step may be carried out at a temperature from 30 to 60°C, preferably from 50 to 55°C.

The method according to the invention further comprises a second step of reacting the isocyanate-functional adduct with a polyglycerin polyol to obtain a urethane (meth)acrylate. The polyglycerin polyol and the urethane (meth)acrylate may be as defined above.

The second step may be carried out for example by adding the polyglycerin polyol into the reactor comprising the isocyanate-functional adduct. According to some preferred embodiments, this addition is carried out dropwise. Alternatively, this addition may be carried out batchwise (for example the polyglycerin polyol may be added in the reactor in one or more than one portions).

The addition speed of polyglycerin polyol in the reactor may be higher for a urethane (meth)acrylate having residual hydroxy groups than for a urethane (meth)acrylate being devoid hydroxy groups. This makes it possible to avoid side reactions (notably the reaction of the secondary hydroxy group of the polyglycerin polyol with the polyisocyanate).

For example, the addition speed of polyglycerin polyol may be from 10 to 15 g/min in a 1,000 mL reactor for a urethane (meth)acrylate having residual OH groups while the addition speed of polyglycerin polyol may be from 2 to 3 g/min in a 1,000 mL reactor for a urethane (meth)acrylate being devoid of OH groups.

The ratio $R^2$ of the polyglycerin polyol to the polyisocyanate may be from 0.1 to 0.8, preferably from 0.2 to 0.5.

The above ratio $R^2$ may be calculated with the following equation:

$$R^2 = \frac{n_{polyglycerin}}{n_{polyisocyanate}}$$

wherein

$n_{polyglycerin}$ is the number of moles of OH groups in the polyglycerin polyol;

$n_{polyisocyanate}$ is the number of moles of NCO groups in the polyisocyanate.

The number of moles $n_{polyglycerin}$ and $n_{polyisocyanate}$ may be calculated with the following equation:

$$n_{polyglycerin} = \frac{m_{polyglycerine} \times f_{polyglycerine}}{Mw_{polyglycerine}}$$

wherein:

$m_{polyglycerin}$ is the weight of polyglycerin polyol used to prepare the urethane (meth)acrylate in grams; $Mw_{polyglycerin}$ is the molecular weight of the polyglycerin polyol in g/mol; and $f_{polyglycerin}$ is the number of OH groups in the polyglycerin polyol.

$$n_{polyisocyanate} = \frac{m_{polyisocyanate} \times f_{polyisocyanate}}{Mw_{polyisocyanate}}$$

wherein:

$m_{polyisocyanate}$ is the weight of polyisocyanate used to prepare the urethane (meth)acrylate in grams; $Mw_{polyisocyanate}$ is the molecular weight of the polyisocyanate in g/mol; and $f_{polyisocyanate}$ is the number of NCO groups in the polyisocyanate.

In case the urethane (meth)acrylate has residual hydroxy groups, such step may be carried out at a temperature from 55 to 70°C, preferably from 60 to 65°C.

In case the urethane (meth)acrylate is devoid of hydroxy groups, such step may be carried out at a temperature from 75 to 85°C.

Furthermore, to prevent undesired side reactions, antioxidants (stabilizers) such as butylated hydroxytoluene may be present while the components used to prepare the oligomers are being reacted and/or the reaction mixtures may be sparged with air while such reacting is taking place. Further, the stoichiometry between the different components used to prepare the oligomers may be adjusted in accordance with conventional practice in order to achieve a particular desired degree of polyurethane chain extension and/or end group functionalization.

Curable composition

The present invention further relates to a curable composition. By *"curable composition"* is meant a composition capable of being cured to provide polymerized, cured materials.

The curable composition comprises a urethane (meth)acrylate and an ethylenically unsaturated compound.

The urethane (meth)acrylate may be as described above.

The urethane (meth)acrylate may be present in the curable composition at a content equal to or lower than 95% by weight, preferably from 1 to 95% by weight, more preferably from 50 to 90% by weight, and even more preferably from 65 to 85% by weight, relative to the total weight of the curable composition.

The ethylenically unsaturated compound typically contains one or more ethylenically unsaturated functional groups per molecule, preferably one or more (meth)acrylic functional groups per molecule. As used herein the term "(meth)acrylic functional group" refers to either an acryloyl functional group ($-C(=O)-CH=CH_2$) or a methacryloyl functional group ($-C(=O)-C(CH_3)=CH_2$). (Meth)acrylic functional groups may be included in an acrylate, methacrylate, acrylamide, or methacrylamide functional group. Compounds with a (meth)acrylic functional group are referred to as (meth)acrylic-functionalized compounds.

Alternatively, the ethylenically unsaturated compound may contain other types of suitable ethylenically unsaturated functional groups including, for example, vinyl functional groups and allyl functional groups.

The additional reactive components may be monomeric or oligomeric in character, as described below in more detail.

According to some embodiments, the ethylenically unsaturated compound may comprise a (meth)acrylic-functionalized compound chosen from (meth)acryic-functionalized monomers and (meth)acrylic-functionalized oligomers.

Any of the (meth)acrylate-functionalized oligomers known in the art may also be used in curable compositions

of the present invention. According to some embodiments, such oligomers contain two or more (meth)acrylate functional groups per molecule. The number average molecular weight of such oligomers may vary widely, e.g., from about 500 to about 50,000.

Suitable (meth)acrylate-functionalized oligomers include, for example, polyester (meth)acrylate oligomers, epoxy (meth)acrylate oligomers, polyether (meth)acrylate oligomers, polyurethane (meth)acrylate oligomers, acrylic (meth)acrylate oligomers, polydiene (meth)acrylate oligomers, polycarbonate (meth)acrylate oligomers and combinations thereof. Such oligomers may be selected and used in combination with one or more (meth)acrylate-functionalized monomers in order to enhance the flexibility, strength and/or modulus, among other attributes, of a cured resin foam prepared using the multi-component system of the present invention.

Exemplary polyester (meth)acrylate oligomers include the reaction products of acrylic or methacrylic acid or mixtures thereof with hydroxyl group-terminated polyester polyols. The reaction process may be conducted such that all or essentially all of the hydroxy groups of the polyester polyol have been (meth)acrylated, particularly in cases where the polyester polyol is difunctional. The polyester polyols can be made by polycondensation reactions of polyhydroxyl functional components (in particular, diols) and polycarboxylic acid functional compounds (in particular, dicarboxylic acids and anhydrides). The polyhydroxyl functional and polycarboxylic acid functional components can each have linear, branched, cycloaliphatic or aromatic structures and can be used individually or as mixtures.

Examples of suitable epoxy (meth)acrylate oligomers include the reaction products of acrylic or methacrylic acid or mixtures thereof with glycidyl ethers or esters.

Suitable polyether (meth)acrylate oligomers include, but are not limited to, the condensation reaction products of acrylic or methacrylic acid or mixtures thereof with polyetherols which are polyether polyols (such as polyethylene glycol, polypropylene glycol or polytetramethylene glycol). Suitable polyetherols can be linear or branched substances containing ether bonds and terminal hydroxy groups. Polyetherols can be prepared by ring opening polymerization of cyclic ethers such as tetrahydrofuran or alkylene oxides with a starter molecule. Suitable starter molecules include water, polyhydroxyl functional materials, polyester polyols and amines.

Polyurethane (meth)acrylate oligomers (sometimes also referred to as *"urethane (meth)acrylate oligomers")* capable of being used in the multi-component systems of the present invention include urethanes based on aliphatic and/or aromatic polyester polyols and polyether polyols and aliphatic and/or aromatic polyester diisocyanates and polyether diisocyanates capped with (meth)acrylate end-groups. Suitable polyurethane (meth)acrylate oligomers include, for example, aliphatic polyester-based urethane di- and tetra-acrylate oligomers, aliphatic polyether-based urethane di- and tetra-acrylate oligomers, as well as aliphatic polyester/polyether-based urethane di- and tetra-acrylate oligomers.

In various embodiments, the polyurethane (meth)acrylate oligomers may be prepared by reacting aliphatic and/or aromatic diisocyanates with OH group terminated polyester polyols (including aromatic, aliphatic and mixed aliphatic/aromatic polyester polyols), polyether polyols, polycarbonate polyols, polycaprolactone polyols, polyorganosiloxane polyols (e.g., polydimethylsiloxane polyols), or polydiene polyols (e.g., polybutadiene polyols), or combinations thereof to form isocyanate-functionalized oligomers which are then reacted with hydroxy-functionalized (meth)acrylates such as hydroxyethyl acrylate or hydroxyethyl methacrylate to provide terminal (meth)acrylate groups. For example, the polyurethane (meth)acrylate oligomers may contain two, three, four or more (meth)acrylate functional groups per molecule.

Suitable acrylic (meth)acrylate oligomers (sometimes also referred to in the art as *"acrylic oligomers")* include oligomers which may be described as substances having an oligomeric acrylic backbone which is functionalized with one or (meth)acrylate groups (which may be at a terminus of the oligomer or pendant to the acrylic backbone). The acrylic backbone may be a homopolymer, random copolymer or block copolymer comprised of repeating units of acrylic monomers. The acrylic monomers may be any monomeric (meth)acrylate such as $C_1$-$C_6$ alkyl (meth)acrylates as well as functionalized (meth)acrylates such as (meth)acrylates bearing hydroxyl, carboxylic acid and/or epoxy groups. Acrylic (meth)acrylate oligomers may be prepared using any procedures known in the art, such as by oligomerizing monomers, at least a portion of which are functionalized with hydroxy, carboxylic acid and/or epoxy groups (e.g., hydroxyalkyl(meth)acrylates, (meth)acrylic acid, glycidyl (meth)acrylate) to obtain a functionalized oligomer intermediate, which is then reacted with one or more (meth)acrylate-containing reactants to introduce the desired (meth)acrylate functional groups.

Exemplary (meth)acrylate-functionalized monomers and oligomers may include ethoxylated bisphenol A di(meth)acrylates; triethylene glycol di(meth)acrylate; ethylene glycol di(meth)acrylate; tetraethylene glycol di(meth)acrylate; polyethylene glycol di(meth)acrylates; 1,4-butanediol diacrylate; 1,4-butanediol dimethacrylate; diethylene glycol diacrylate; diethylene glycol dimethacrylate, 1,6-hexanediol diacrylate; 1,6-hexanediol dimethacrylate; neopentyl glycol diacrylate; neopentyl glycol di(meth)acrylate; polyethylene glycol (600) dimethacrylate (where 600 refers to the approximate number average molecular weight of the polyethylene glycol portion); polyethylene glycol (200) diacrylate; 1,12-dodecanediol dimethacrylate; tetraethylene glycol diacrylate; triethylene glycol diacrylate, 1,3-butylene glycol dimethacrylate, tripropylene glycol diacrylate, polybutadiene diacrylate; methyl pentanediol diacrylate; polyethylene glycol (400) diacrylate; ethoxylated$_2$ bisphenol A dimethacrylate; ethoxylated$_3$ bisphenol A dimethacrylate; ethoxylated$_3$ bisphenol

A diacrylate; cyclohexane dimethanol dimethacrylate; cyclohexane dimethanol diacrylate; ethoxylated$_{10}$ bisphenol A dimethacrylate (where the numeral following *"ethoxylated"* is the average number of oxyalkylene moieties per molecule); dipropylene glycol diacrylate; ethoxylated$_4$ bisphenol A dimethacrylate; ethoxylated$_6$ bisphenol A dimethacrylate; ethoxylateds bisphenol A dimethacrylate; alkoxylated hexanediol diacrylates; alkoxylated cyclohexane dimethanol diacrylate; dodecane diacrylate; ethoxylated$_4$ bisphenol A diacrylate; ethoxylated$_{10}$ bisphenol A diacrylate; polyethylene glycol (400) dimethacrylate; polypropylene glycol (400) dimethacrylate; metallic diacrylates; modified metallic diacrylates; metallic dimethacrylates; polyethylene glycol (1000) dimethacrylate; methacrylated polybutadiene; propoxylated$_2$ neopentyl glycol diacrylate; ethoxylated$_{30}$ bisphenol A dimethacrylate; ethoxylated$_{30}$ bisphenol A diacrylate; alkoxylated neopentyl glycol diacrylates; polyethylene glycol dimethacrylates; 1,3-butylene glycol diacrylate; ethoxylated$_2$ bisphenol A dimethacrylate; dipropylene glycol diacrylate; ethoxylated$_4$ bisphenol A diacrylate; polyethylene glycol (600) diacrylate; polyethylene glycol (1000) dimethacrylate; tricyclodecane dimethanol diacrylate; propoxylated$_2$ neopentyl glycol diacrylate; diacrylates of alkoxylated aliphatic alcohols trimethylolpropane trimethacrylate; trimethylolpropane triacrylate; tris(2-hydroxyethyl) isocyanurate triacrylate; ethoxylated$_{20}$ trimethylolpropane triacrylate; pentaerythritol triacrylate; ethoxylated$_3$ trimethylolpropane triacrylate; propoxylated$_3$ trimethylolpropane triacrylate; ethoxylated$_6$ trimethylolpropane triacrylate; propoxylated6 trimethylolpropane triacrylate; ethoxylated$_9$ trimethylolpropane triacrylate; alkoxylated trifunctional acrylate esters; trifunctional methacrylate esters; trifunctional acrylate esters; propoxylated$_3$ glyceryl triacrylate; propoxylated$_{5.5}$ glyceryl triacrylate; ethoxylated$_{15}$ trimethylolpropane triacrylate; trifunctional phosphoric acid esters; trifunctional acrylic acid esters; pentaerythritol tetraacrylate; di-trimethylolpropane tetraacrylate; ethoxylated$_4$ pentaerythritol tetraacrylate; pentaerythrilol polyoxyethylene tetraacrylate; dipentaerythritol pentaacrylate; pentaacrylate esters; epoxy acrylate oligomers; epoxy methacrylate oligomers; urethane acrylate oligomers; urethane methacrylate oligomers; polyester acrylate oligomers; polyester methacrylate oligomers; stearyl methacrylate oligomer; acrylic acrylate oligomers; perfluorinated acrylate oligomers; perfluorinated methacrylate oligomers; amino acrylate oligomers; amine-modified polyether acrylate oligomers; and amino methacrylate oligomers.

According to some embodiments, the ethylenically unsaturated compound may comprise a (meth)acrylate-functionalized compound containing a single acrylate or methacrylate functional group per molecule (referred to herein as *"mono(meth)acrylate-functionalized compounds"*. Any of such compounds known in the art may be used.

Examples of suitable mono(meth)acrylate-functionalized compounds include, but are not limited to, mono-(meth)acrylate esters of aliphatic alcohols (wherein the aliphatic alcohol may be straight chain, branched or alicyclic and may be a mono-alcohol, a di-alcohol or a polyalcohol, provided only one hydroxyl group is esterified with (meth)acrylic acid); mono-(meth)acrylate esters of aromatic alcohols (such as phenols, including alkylated phenols); mono-(meth)acrylate esters of alkylaryl alcohols (such as benzyl alcohol); mono-(meth)acrylate esters of oligomeric and polymeric glycols such as diethylene glycol, triethylene glycol, dipropylene glycol, tripropylene glycol, polyethylene glycol, and polypropylene glycol); mono-(meth)acrylate esters of monoalkyl ethers of glycols, oligomeric glycols, polymeric glycols; mono-(meth)acrylate esters of alkoxylated (e.g., ethoxylated and/or propoxylated) aliphatic alcohols (wherein the aliphatic alcohol may be straight chain, branched or alicyclic and may be a mono-alcohol, a di-alcohol or a polyalcohol, provided only one hydroxyl group of the alkoxylated aliphatic alcohol is esterified with (meth)acrylic acid); mono-(meth)acrylate esters of alkoxylated (e.g., ethoxylated and/or propoxylated) aromatic alcohols (such as alkoxylated phenols); caprolactone mono(meth)acrylates; and the like.

The following compounds are specific examples of mono(meth)acrylate-functionalized compounds suitable for use in the curable compositions of the present invention: methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; isobornyl (meth)acrylate; 2-(2-ethoxyethoxy)ethyl (meth)acrylate; cyclohexyl (meth)acrylate; glycidyl (meth)acrylate; isodecyl (meth)acrylate: 2-phenoxyethyl (meth)acrylate: lauryl (meth)acrylate; isobornyl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; and combinations thereof.

The ethylenically unsaturated compound may comprise a (meth)acrylamide monomer. Examples of suitable (meth)acrylamide monomers include (meth)acrylamide; N-methyl (meth)acrylamide; N-ethyl (meth)acrylamide; isopropyl (meth)acrylamide; N,N-diethyl (meth)acrylamide; N-cyclohexyl (meth)acrylamide, N-cyclopentyl (meth)acrylamide; N-butoxymethyl (meth)acrylamide; N,N-dibutyl (meth)acrylamide; N-butyl (meth)acrylamide; diacetone (meth)acrylamide; N-(N,N-dimethylamino)ethyl (meth)acrylamide; N,-(N,N-dimethylamino)propyl (meth)acrylamide, N,N-diethyl (meth)acrylamide; N,N-dimethyl (meth)acrylamide; N-octyl (meth)acrylamide; N-decyl (meth)acrylamide; N-dodecyl (meth)acrylamide; N-octadecyl (meth)acrylamide; N-isopropyl (meth)acrylamide; N-tert-butyl (meth)acrylamide; N-isobutyl

(meth)acrylamide, N,N,3,3-tetramethylacrylamide; N-methylol (meth)acrylamide; N-[2-hydroxyethyl] (meth)acrylamide; N-phenyl (meth)acrylamide; acryloyl morpholine; and combinations thereof

According to preferred embodiments, the ethylenically unsaturated compound may be chosen from a mono- or multi-functional (meth)acrylic monomer or oligomer, and more preferably chosen from acryloyl morpholine and polyethylene glycol di(meth)acrylate.

The ethylenically unsaturated compound may be present in the curable composition at a content of at least 5% by weight, preferably from 5 to 99% by weight, more preferably from 10 to 50% by weight and even more preferably from 15 to 35% by weight, relative to the total weight of the curable composition.

The curable composition according to the invention may further comprise one or more additives. Such additives include, but are not limited to, stabilizers, photoinitiators, antioxidants/photostabilizers, light blockers/absorbers, polymerization inhibitors, foam inhibitors, flow or leveling agents, colorants, pigments, dispersants (wetting agents, surfactants), slip additives, fillers, chain transfer agents, thixotropic agents, matting agents, impact modifiers, waxes or other various additives, including any of the additives conventionally utilized in the coating, sealant, adhesive, molding, 3D printing or ink arts. Such additives may be present at a content equal to or less than 15% by weight, preferably equal to or less than 10% by weight, relative to the total weight of the curable composition.

Regarding the stabilizer, this component makes it possible to provide adequate storage stability and shelf life. Advantageously, one or more such stabilizers are present at each stage of the method used to prepare the curable composition, to protect against unwanted reactions of the components of the curable composition (in particular, the components of the curable composition bearing (meth)acrylate functional groups). As used herein, the term *"stabilizer"* means a compound or substance which retards or prevents reaction or curing of (meth)acrylate functional groups present in a composition in the absence of actinic radiation. However, it will be advantageous to select an amount and type of stabilizer such that the composition remains capable of being cured when exposed to actinic radiation (that is, the stabilizer does not prevent radiation curing of the composition). Typically, effective stabilizers for purposes of the present invention will be classified as free radical stabilizers (i.e., stabilizers which function by inhibiting free radical reactions).

Any of the stabilizers known in the art related to (meth)acrylate-functionalized compounds may be utilized in the present invention. Quinones represent a particularly preferred type of stabilizer which can be employed in the context of the present invention. As used herein, the term *"quinone"* includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized.

The concentration of stabilizer in the curable composition will vary depending upon the particular stabilizer or combination of stabilizers selected for use and also on the degree of stabilization desired and the susceptibility of components in the curable compositions towards degradation in the absence of stabilizer. Typically, however, the curable composition is formulated to comprise from 50 to 5,000 ppm of stabilizer. According to certain embodiments, the reaction mixture during each stage of the method employed to make the curable composition contains at least some stabilizer, e.g., at least 50 ppm stabilizer.

According to some embodiments, the curable composition described herein include may comprise at least one photoinitiator. A photoinitiator may be considered any type of substance that, upon exposure to radiation (e.g., actinic radiation), forms species that initiate the reaction and curing of polymerizing organic substances present in the curable composition. Suitable photoinitiators include both free radical photoinitiators as well as cationic photoinitiators and combinations thereof.

Free radical polymerization initiators are substances that form free radicals when irradiated. The use of free radical photoinitiators is especially preferred. Non-limiting types of free radical photoinitiators suitable for use in the curable compositions of the present invention include, for example, benzoins, benzoin ethers, acetophenones, benzyl, benzyl ketals, anthraquinones, phosphine oxides, $\alpha$-hydroxyketones, phenylglyoxylates, $\alpha$-aminoketones, benzophenones, thioxanthones, xanthones, acridine derivatives, phenazene derivatives, quinoxaline derivatives and triazine compounds.

The amount of photoinitiator may be varied as may be appropriate depending upon the photoinitiator(s) selected, the amounts and types of polymerizable species present in the curable composition, the radiation source and the radiation conditions used, among other factors. Typically, however, the amount of photoinitiator may be from 0.05% to 5%, preferably 0.1% to 2% by weight, based on the total weight of the curable composition.

Furthermore, the curable composition of the present invention may comprise one or more light blockers (sometimes referred to in the art as absorbers), particularly where the curable composition is to be used as a resin in a three-dimensional printing method involving photocuring of the curable composition. The light blocker(s) may be any such substances known in the three-dimensional printing art, including for example non-reactive pigments and dyes. The light blocker may be a visible light blocker or a UV light blocker, for example. Examples of suitable light blockers include, but are not limited to, titanium dioxide, carbon black and organic ultraviolet light absorbers such as hydroxybenzophenone, hydroxyphenylbenzotriazole, oxanilide, benzophenone, thioxanthone, hydroxyphenyltriazine, Sudan I, bromothymol blue, 2,2'-(2,5-thiophenediyl)bis(5-tert-butylbenzoxazole) (sold under the brand name *"Benetex OB Plus")* and benzotriazole ultraviolet light absorbers.

The amount of light blocker may be varied as may be desired or appropriate for particular applications. Generally speaking, if the curable composition contains a light blocker, it is present in a concentration of from 0.001 to 10% by weight based on the total weight of the curable composition.

Advantageously, the curable compositions of the present invention may be formulated to be solvent-free, i.e., free of any non-reactive volatile substances (substances having a boiling point at atmospheric pressure of 150°C or less). For example, the curable compositions of the present invention may contain little or no non-reactive solvent, e.g., less than 10% or less than 5% or less than 1% or even 0% non-reactive solvent, based on the total weight of the curable composition.

Use of the Curable composition

As mentioned above, the curable composition according to the present invention may contain one or more photoinitiators and may be photocurable.

Alternatively, the curable composition according to the present invention may not include any initiator and can be curable (at least in part) with electron beam energy.

Alternatively, the curable composition according to the present invention includes at least one free radical initiator that decomposes when heated or in the presence of an accelerator and is curable chemically (i.e., without having to expose the curable composition to radiation). The at least one free radical initiator that decomposes when heated or in the presence of an accelerator may, for example, comprise a peroxide or azo compound. Suitable peroxides for this purpose may include any compound, in particular any organic compound, that contains at least one peroxy (-O-O-) moiety, such as, for example, dialkyl, diaryl and aryl/alkyl peroxides, hydroperoxides, percarbonates, peresters, peracids, acyl peroxides and the like. The at least one accelerator may comprise, for example, at least one tertiary amine and/or one or more other reducing agents based on metal-containing salts (such as, for example, carboxylate salts of transition metals such as iron, cobalt, manganese, vanadium and the like and combinations thereof). The accelerator(s) may be selected so as to promote the decomposition of the free radical initiator at room or ambient temperature to generate active free radical species, such that curing of the curable composition is achieved without having to heat or bake the curable composition. In other embodiments, no accelerator is present and the curable composition is heated to a temperature effective to cause decomposition of the free radical initiator and to generate free radical species which initiate curing of the polymerizable compound(s) present in the curable composition.

The urethane (meth)acrylate may have a viscosity from 100 to 100,000 mPa.s at 60°C, preferably from 200 to 20,000 mPa.s at 60°C. The viscosity is measured with a rotational Brookfield viscometer by using one of the standards ASTM D1084 and ASTM D2556.

The curable compositions described herein may be compositions that are to be subjected to curing by means of free radical polymerization, cationic polymerization or other types of polymerization. One or more initiators, such as a free radical initiator (e.g., photoinitiator, peroxide initiator) may be present in the curable composition.

In particular embodiments, the curable compositions are photocured (i.e., cured by exposure to actinic radiation such as light, in particular visible or UV light).

End use applications for the curable compositions include, but are not limited to, inks, coatings, adhesives, additive manufacturing resins (such as 3D printing resins), molding resins, sealants, composites, antistatic layers, electronic applications, recyclable materials, smart materials capable of detecting and responding to stimuli, and biomedical materials.

Cured compositions prepared from curable compositions as described herein may be used, for example, in three-dimensional articles (wherein the three-dimensional article may consist essentially of or consist of the cured composition), coated articles (wherein a substrate is coated with one or more layers of the cured composition, including encapsulated articles in which a substrate is completely encased by the cured composition), laminated or adhered articles (wherein a first component of the article is laminated or adhered to a second component by means of the cured composition), composite articles or printed articles (wherein graphics or the like are imprinted on a substrate, such as a paper, plastic or M-containing substrate, using the cured composition).

Prior to curing, the curable composition may be applied to a substrate surface in any known conventional manner, for example, by spraying, knife coating, roller coating, casting, drum coating, dipping, and the like and combinations thereof. Indirect application using a transfer process may also be used. A substrate may be any commercially relevant substrate, such as a high surface energy substrate or a low surface energy substrate, such as a metal substrate or plastic substrate, respectively. The substrates may comprise metal, paper, cardboard, glass, thermoplastics such as polyolefins, polycarbonate, acrylonitrile butadiene styrene (ABS), and blends thereof, composites, wood, leather and combinations thereof. When used as an adhesive, the curable composition may be placed between two substrates and then cured, the cured composition thereby bonding the substrates together to provide an adhered article. Curable compositions in accordance with the present invention may also be formed or cured in a bulk manner (e.g., the curable

composition may be cast into a suitable mold and then cured).

Curing may be accelerated or facilitated by supplying energy to the curable composition, such as by heating the curable composition and/or by exposing the curable composition to a radiation source, such as visible or UV light, infrared radiation, and/or electron beam radiation. Thus, the cured composition may be deemed the reaction product of the curable composition, formed by curing. A curable composition may be partially cured by exposure to actinic radiation, with further curing being achieved by heating the partially cured article. For example, an article formed from the curable composition (e.g., a 3D printed article) may be heated at a temperature of from 40°C to 120°C for a period of time of from 5 minutes to 12 hours.

A plurality of layers of a curable composition in accordance with the present invention may be applied to a substrate surface; the plurality of layers may be simultaneously cured (by exposure to a single dose of radiation, for example) or each layer may be successively cured before application of an additional layer of the curable composition.

The curable compositions which are described herein can be used as resins in three-dimensional printing applications. Three-dimensional (3D) printing (also referred to as additive manufacturing) is a process in which a 3D digital model is manufactured by the accretion of construction material. The 3D printed object is created by utilizing the computer-aided design (CAD) data of an object through sequential construction of two dimensional (2D) layers or slices that correspond to cross-sections of 3D objects. Stereolithography (SL) is one type of additive manufacturing where a liquid resin is hardened by selective exposure to a radiation to form each 2D layer. The radiation can be in the form of electromagnetic waves or an electron beam. The most commonly applied energy source is ultraviolet, visible or infrared radiation. Thus, the curable compositions described herein may be used as 3D printing resin formulations intended for use in manufacturing three-dimensional articles using 3D printing techniques. Such three-dimensional articles may be free-standing/self-supporting and may consist essentially of or consist of a composition in accordance with the present invention that has been cured. The three-dimensional article may also be a composite, comprising at least one component consisting essentially of or consisting of a cured composition as previously mentioned as well as at least one additional component comprised of one or more materials other than such a cured composition (for example, a metal component or a thermoplastic component). The curable compositions of the present invention are particularly useful in digital light printing (DLP), although other types of three-dimensional (3D) printing methods may also be practiced using the inventive curable compositions (e.g., SLA, inkjet). The curable compositions of the present invention may be used in a three-dimensional printing operation together with another material which functions as a scaffold or support for the article formed from the curable composition of the present invention.

Thus, the curable compositions of the present invention are useful in the practice of various types of three-dimensional fabrication or printing techniques, including methods in which construction of a three-dimensional object is performed in a stepwise or layer-by-layer manner. In such methods, layer formation may be performed by solidification (curing) of the curable composition under the action of exposure to radiation, such as visible, UV or other actinic irradiation. For example, new layers may be formed at the top surface of the growing object or at the bottom surface of the growing object. The curable compositions of the present invention may also be advantageously employed in methods for the production of three-dimensional objects by additive manufacturing wherein the method is carried out continuously. For example, the object may be produced from a liquid interface. Suitable methods of this type are sometimes referred to in the art as "continuous liquid interface (or interphase) product (or printing)" ("*CLIP*") methods. Such methods are described, for example, in WO 2014/126830; WO 2014/126834; WO 2014/126837; and Tumbleston et al., "Continuous Liquid Interface Production of 3D Objects," Science Vol. 347, Issue 6228, pp. 1349-1352 (March 20, 2015), the entire disclosure of which is incorporated herein by reference in its entirety for all purposes.

When stereolithography is conducted above an oxygen-permeable build window, the production of an article using a curable composition in accordance with the present invention may be enabled in a CLIP procedure by creating an oxygen-containing *"dead zone"* which is a thin uncured layer of the curable composition between the window and the surface of the cured article as it is being produced. In such a process, a curable composition is used in which curing (polymerization) is inhibited by the presence of molecular oxygen; such inhibition is typically observed, for example, in curable compositions which are capable of being cured by free radical mechanisms. The dead zone thickness which is desired may be maintained by selecting various control parameters such as photon flux and the optical and curing properties of the curable composition. The CLIP process proceeds by projecting a continuous sequence of actinic radiation (e.g., UV) images (which may be generated by a digitial light-processing imaging unit, for example) through an oxygen-permeable, actinic radiation- (e.g., UV-) transparent window below a bath of the curable composition maintained in liquid form. A liquid interface below the advancing (growing) article is maintained by the dead zone created above the window. The curing article is continuously drawn out of the curable composition bath above the dead zone, which may be replenished by feeding into the bath additional quantities of the curable composition to compensate for the amounts of curable composition being cured and incorporated into the growing article.

**Examples**

The following examples illustrate the invention without limiting it.

Materials and methods

The following compounds were used in the examples:

| Reference | Type | Chemical name (Supplier) |
|---|---|---|
| R-PG | Polyol | Polyglycerin (diglycerin 15-35%, triglycerin 40-60%, tetraglycerin 10-30%) Mw = 240 g/mol OHV = 1,090 to 1,240 mg KOH/g (Sakamoto Yakuhin Kogyo Co., Ltd.) |
| PGL-06 | | Polyglycerin (hexaglycerin 80-100%) Mw = 462 g/mol OHV = 900 to 1,000 mg KOH/g (Daicel corporation) |
| Glycerol | | glycerol (Wako pure chemical Industries, Ltd) |
| DEG | | diethylene glycol (Wako pure chemical Industries, Ltd) |
| PTMG | | polytetramethylene glycol Mw = 650 g/mol (Mitsubishi Chemical corporation) |
| IPDI | Diisocyanate | isophorone diisocyanate (Wako pure chemical Industries, Ltd) |
| AOI-VM | Isocyanate acrylate | 2-Isocyanatoethyl acrylate (Showa Denko) |
| HEA | Hydroxy-functional (meth) acrylate | 2-hydroxyethyl acrylate (Wako pure chemical Industries, Ltd) |
| EA-051 | Hydroxy-functional (meth) acrylate | polyethylene glycol monoacrylate Mw = 340 g/mol (Hannong Chemicals) |
| AE-400 | Hydroxy-functional (meth) acrylate | polyethylene glycol monoacrylate Mw = 520 g/mol (NOF Corporation) |
| SR252NS | (Meth)acrylate monomer | Polyethylene glycol (600) dimethacrylate (Sartomer (Guangzhou) Chemicals Ltd.) |
| ACMO | (Meth)acrylate monomer | acryloyl morpholine (KJ Chemicals Corporation) |
| Irgacure 184 | Initiator | 1-hydroxy-cyclohexyl-phenyl-ketone (Tokyo Chemical Industry Co., Ltd) |

The following methods were used to measure the different properties in the examples:

*Water tolerance:*

The water tolerance makes it possible to evaluate the degree of hydrophilicity, and the higher the value, the higher the hydrophilicity. In the method for measuring water tolerance, 0.5 g of the urethane (meth)acrylate was mixed and dispersed in 10 mL of tetrahydrofuran in a 100 mL beaker at 25°C, and a burette was added to the mixture. Ion-exchanged water was gradually added, and the amount (mL) of ion-exchanged water required for the mixture to become cloudy was measured. The amount (mL) of this ion-exchanged water was defined as water tolerance.

*Water solubility:*

Water solubility was measured by mixing the urethane (meth)acrylate with water and then determining the level at which incompatibility was indicated - either by cloudiness or phase separation. 10.0 g of the urethane (meth)acrylate was mixed and dispersed in 90 mL of water at 25°C. The mixing solution was kept at 25°C for 1 hour and the water solubility was defined as follows:

1: Not soluble
2: Partially soluble and phase separation or cloudiness after 1 hour

3: Completely soluble but phase separation or cloudiness after 1 hour
4: Completely soluble and no phase separation or cloudiness after 1 hour

*Tensile testing (tensile stress, tensile modulus and elongation)*

Elongation at break (machine direction), tensile stress and modulus were measured on a cured sample (dumbbell No-5) with a thickness of 30 to 100 μm according to JIS K 7127:1999 and JIS K 7161:1994. The distance between the grips was 8 cm. The initial sample length used for the calculation of elongation at break was the length of the narrow part of the specimen (2.5 cm). The strain rate was 3 cm/min. The value of the tensile stress was immediately before the test piece breaks.

*Pendulum hardness*

Pendulum hardness was measured on a 10 micron thick cured sample with a Pendulum hardness tester according to ISO 1522: 2006 by SP0505 Koenig method.

*Number average molecular weight*

The number average molecular weight was determined by gel permeation chromatography (GPC) using polystyrene standards. The measurement conditions of GPC are given below.
Model: Waters Corporation made by Alliance high-performance liquid chromatograph system

- Column: SHODEX GPC KF-G/-401HQ/-402.5HQ/-403HQ (4.6 x 250 mm)
- Eluent: THF
- Flow rate: 0.45 mL/min
- Temperature : 40°C
- Injection volume and concentration of sample. : 5 μL, 10 mg/mL
- Detection: RI (differential refractometer)
- System to gather and process data: Waters Empower3

*Viscosity*

The viscosity was measured at 60°C using a rotational Brookfield viscometer. As is known in the art, various ASTM methods (such as ASTM D1084 and ASTM D2556), all of which are quite similar, may be used to measure viscosity using a rotational Brookfield viscometer, with the spindle size being selected to make the torque between 50 and 70%. The particular ASTM method was selected based upon how viscous the liquid sample was and whether the liquid was Newtonian or non-Newtonian in character, among possibly other factors.
Examples 1 to 11 are according to the invention while examples 12 to 15 are comparative examples. In comparative examples 12 to 14, polyglycerin polyol was replaced with different polyols outside the scope of the present invention. Comparative example 15 is obtained using a (meth)acrylate with a NCO functional group instead of a polyisocyanate and a hydroxy-functional (meth)acrylate.

Example 1 (according to the invention)

43.3 g of IPDI, 0.1 g of butylated hydroxytoluene and 0.1 g of dibutyltin dilaurate were charged into a 1 L reactor. 30.20 g of HEA were added dropwise with dry air sparge and reacted for 2 hours at 50 to 60°C to form an isocyanate-functional adduct. 20.0 g of ACMO was added in the mixture and then heated at 75°C. Then 6.3 g of R-PG were added dropwise in the mixture to react the primary and secondary hydroxy functional group of the R-PG with isocyanate-functional adduct. The mixture was reacted for 2 to 4 hours at 75 to 85°C. The final resin was a clear colorless material with a viscosity of 22,500 mPa.s at 60°C. The final resin comprised 80% by weight of urethane acrylate and 20% by weight of ACMO. The urethane acrylate had a Mn of 2,550 g/mol. The OH value of the urethane acrylate is 0.9 mg KOH/g.

Example 2 (according to the invention)

38.75 g of IPDI, 0.1 g of butylated hydroxytoluene and 0.1 g of dibutyltin dilaurate were charged into a 1 L reactor. 24.30 g of HEA were added dropwise with dry air sparge and reacted for 2 hours at 50 to 60°C to form an isocyanate-functional adduct. 30.0 g of ACMO were added in the mixture and then heated at 75°C. Then 6.75 g of R-PG were added dropwise in the mixture to react the primary and secondary hydroxyl functional group of the R-PG with

isocyanate-functional adduct. The mixture was reacted for 2 to 4 hours at 75 to 85°C. The final resin was a clear colorless material with a viscosity of 15,800 mPa.s at 60°C. The final resin comprised 70% by weight of urethane acrylate and 30% by weight of ACMO. The urethane acrylate had a Mn of 2,720 g/mol. The OH value of the urethane acrylate is 1.0 mg KOH/g.

Example 3 (according to the invention)

37.80 g of IPDI, 0.2 g of butylated hydroxytoluene and 0.1 g of dibutyltin dilaurate were charged into a 1 L reactor. 24.30 g of HEA were added dropwise with dry air sparge and reacted for 2 hours at 50 to 60°C to form an isocyanate-functional adduct. 30.0 g of ACMO were added in the mixture and then heated at 75°C. Then 8.15 g of PGL-06 were added dropwise in the mixture to react the primary and secondary hydroxyl functional group of the PGL-06 with isocyanate-functional adduct. The mixture was reacted for 2-4 hours at 75 to 85°C. The final resin was a clear colorless material with a viscosity of 17,250 mPa.s at 60°C. The final resin comprised 70% by weight of urethane acrylate and 30% by weight of ACMO. The urethane acrylate had a Mn of 3,170 g/mol. The OH value of the urethane acrylate is 1.0 mg KOH/g.

Example 4 (according to the invention)

25.9 grams of IPDI, 0.2 gram of butylated hydroxytoluene and 0.1 gram of dibutyltin dilaurate were charged into a 1 L reactor. 49.3 grams of EA-051 were added dropwise with dry air sparge and reacted for 2 hours at 50 to 60°C to form an isocyanate-functional adduct. 20.0 grams of ACMO was added in the mixture and then heated to 75°C. And then 4.5 grams of R-PG was added dropwise in the mixture to react the primary and secondary hydroxyl functional group of the R-PG with isocyanate-functional adduct. The mixture was reacted for 2-4 hours at 75 to 85°C. The final resin was a clear colorless material with a viscosity of 1,630 mPa.s at 60°C. The final resin comprises 80% by weight of urethane acrylate and 20% by weight of ACMO. The urethane acrylate has a Mn of 3,250 g/mol. The OH value of the urethane acrylate is 1.0 mg KOH/g.

Example 5 (according to the invention)

19.8 grams of IPDI, 0.2 gram of butylated hydroxytoluene and 0.1 gram of dibutyltin dilaurate were charged into a 1000 mL reactor. 56.45 grams of AE-400 were added dropwise with dry air sparge and reacted for 2 hours at 50 to 60°C to form an isocyanate-functional adduct. 20.0 grams of ACMO was added in the mixture and then heated to 75°C. And then 3.45 grams of R-PG was added dropwise in the mixture to react the primary and secondary hydroxyl functional group of the R-PG with isocyanate-functional adduct. The mixture was reacted for 2-4 hours at 75 to 85°C. The final resin was a clear colorless material with a viscosity of 1,850 mPa.s at 60°C. The final resin comprises 80% by weight of urethane acrylate and 20% by weight of ACMO. The urethane acrylate has a Mn of 4,400 g/mol. The OH value of the urethane acrylate is 0.8 mg KOH/g.

Example 6 (according to the invention)

34.0 g of IPDI, 0.2 g of butylated hydroxytoluene and 0.1 g of dibutyltin dilaurate were charged into a 1 L reactor. 21.40 g of HEA were added dropwise with dry air sparge and reacted for 2 hours at 50 to 60°C to form an isocyanate-functional adduct. 30.0 g of ACMO were added in the mixture and the temperature of the reactor was hold at 60°C. Then 14.30 g of R-PG were added very quickly in the mixture to react the primary hydroxyl functional group of the R-PG with isocyanate-functional adduct. The mixture was reacted for 2 to 4 hours at 60 to 65°C. The final resin was a clear colorless material with a viscosity of 2,670 mPa.s at 60°C. The final resin comprised 70% by weight of urethane acrylate and 30% by weight of ACMO. The urethane acrylate had a Mn of 1,860 g/mol. The OH value of the urethane acrylate is 140 mg KOH/g.

Example 7 (according to the invention)

24.0 grams of IPDI, 0.2 gram of butylated hydroxytoluene and 0.1 gram of dibutyltin dilaurate were charged into a 1 L reactor. 45.50 grams of EA-051 were added dropwise with dry air sparge and reacted for 2 hours at 50 to 60°C to form an isocyanate-functional adduct. 20.0 grams of ACMO was added in the mixture and the temperature of the reactor was hold at 60°C. And then 10.20 grams of R-PG was added very quickly in the mixture to react the primary hydroxyl functional group of the R-PG with isocyanate-functional adduct. The mixture was reacted for 2-4 hours at 60 to 65°C. The final resin was a clear colorless material with a viscosity of 900 mPa.s at 60°C. The final resin comprises 80% by weight of urethane acrylate and 20% by weight of ACMO. The urethane acrylate has a Mn of 2,200 g/mol. The

OH value of the urethane acrylate is 108 mg KOH/g.

Example 8 (according to the invention)

23.02 grams of IPDI, 0.08 gram of butylated hydroxytoluene and 0.1 gram of dibutyltin dilaurate were charged into a 1 L reactor. 48.80 grams of EA-051 were added dropwise with dry air sparge and reacted for 2 hours at 50 to 60°C to form an isocyanate-functional adduct. 20.0 grams of SR252NS was added in the mixture and the temperature of the reactor was hold at 60°C. And then 8.0 grams of R-PG was added very quickly in the mixture to react the primary hydroxyl functional group of the R-PG with isocyanate-functional adduct. The mixture was reacted for 2-4 hours at 60 to 65°C. The final resin was a clear colorless material with a viscosity of 700 mPa.s at 60°C. The final resin comprises 80% by weight of urethane acrylate and 20% by weight of SR252NS. The urethane acrylate has a Mn of 1,970 g/mol. The OH value of the urethane acrylate is 88 mg KOH/g.

Example 9 (according to the invention)

20.85 grams of IPDI, 0.2 gram of butylated hydroxytoluene and 0.1 gram of dibutyltin dilaurate were charged into a 1 mL reactor. 43.95 grams of EA-051 were added dropwise with dry air sparge and reacted for 2 hours at 50 to 60°C to form an isocyanate-functional adduct. 20.0 grams of ACMO was added in the mixture and the temperature of the reactor was hold at 60°C. And then 14.90 grams of PGL-06 was added very quickly in the mixture to react the primary hydroxyl functional group of the R-PG with isocyanate-functional adduct. The mixture was reacted for 2-4 hours at 60 to 65°C. The final resin was a clear colorless material with a viscosity of 650 mPa.s at 60°C. The final resin comprises 80% by weight of urethane acrylate and 20% by weight of ACMO. The urethane acrylate has a Mn of 2,090 g/mol. The OH value of the urethane acrylate is 147 mg KOH/g.

Example 10 (according to the invention)

18.65 grams of IPDI, 0.2 gram of butylated hydroxytoluene and 0.1 gram of dibutyltin dilaurate were charged into a 1 L reactor. 53.15 grams of AE-400 were added dropwise with dry air sparge and reacted for 2 hours at 50 to 60°C to form an isocyanate-functional adduct. 20.0 grams of ACMO was added in the mixture and the temperature of the reactor was hold at 60°C. And then 7.9 grams of R-PG was added very quickly in the mixture to react the primary hydroxyl functional group of the R-PG with isocyanate-functional adduct. The mixture was reacted for 2-4 hours at 60 to 65°C. The final resin was a clear colorless material with a viscosity of 1,120 mPa.s at 60°C. The final resin comprises 80% by weight of urethane acrylate and 20% by weight of ACMO. The urethane acrylate has a Mn of 3,120 g/mol. The OH value of the urethane acrylate is 75 mg KOH/g.

Example 11 (according to the invention)

30.0 g of IPDI, 0.2 g of butylated hydroxytoluene and 0.1 g of dibutyltin dilaurate were charged into a 1 L reactor. 23.60 g of HEA were added dropwise with dry air sparge and reacted for 2 hours at 50 to 60°C to form an isocyanate-functional adduct. 30.0 g of ACMO were added in the mixture and the temperature of the reactor was hold at 60°C. Then 16.10 g of PGL-06 were added very quickly in the mixture to react the primary hydroxyl functional group of the R-PG with isocyanate-functional adduct. The mixture was reacted for 2 to 4 hours at 60 to 65°C. The final resin was a clear colorless material with a viscosity of 920 mPa.s at 60°C. The final resin comprised 70% by weight of urethane acrylate and 30% by weight of ACMO. The urethane acrylate had a Mn of 1,750 g/mol. The OH value of the urethane acrylate is 155 mg KOH/g.

Example 12 (comparative)

40.1 g of IPDI, 0.1 g of butylated hydroxytoluene and 0.1 g of dibutyltin dilaurate were charged into a 1 L reactor. 25.20 g of HEA were added dropwise with dry air sparge and reacted for 2 hours at 50 to 60°C to form an isocyanate-functional adduct. 30.0 g of ACMO were added in the mixture and then heated at 75°C. Then 4.75 g of glycerol were added dropwise in the mixture to react the primary and secondary hydroxyl functional group of the glycerol with isocyanate-functional adduct. The mixture was reacted for 2 to 4 hours at 75 to 85°C. The final resin was a clear colorless material with a viscosity of 10,650 mPa.s at 60°C. The final resin comprised 70% by weight of urethane acrylate and 30% by weight of ACMO. The urethane acrylate had a Mn of 2,200 g/mol.

Example 13 (comparative)

38.3 g of IPDI, 0.1 g of butylated hydroxytoluene and 0.1 g of dibutyltin dilaurate were charged into a 1 L reactor. 24.05 g of HEA were added dropwise with dry air sparge and reacted for 2 hours at 50 to 60°C to form an isocyanate-functional adduct. 30.0 g of ACMO were added in the mixture and then heated at 75°C. Then 7.45 g of DEG were added dropwise in the mixture. The mixture was reacted for 2 to 4 hours at 75 to 85°C. The final resin was a clear colorless material with a viscosity of 870 mPa.s at 60°C. The final resin comprised 70% by weight of urethane acrylate and 30% by weight of ACMO. The urethane acrylate had a Mn of 1,750 g/mol.

Example 14 (comparative)

24.05 g of IPDI, 0.1 g of butylated hydroxytoluene and 0.1 g of dibutyltin dilaurate were charged into a 1 L reactor. 15.1 g of HEA were added dropwise with dry air sparge and reacted for 2 hours at 50 to 60°C to form an isocyanate-functional adduct. 30.0 g of ACMO were added in the mixture and then heated at 75°C. And then 30.65 g of PTMG was added dropwise in the mixture. The mixture was reacted for 2 to -4 hours at 75 to 85°C. The final resin was a clear colorless material with a viscosity of 480 mPa.s at 60°C. The final resin comprised 70% by weight of urethane acrylate and 30% by weight of ACMO. The urethane acrylate had a Mn of 2,150 g/mol.

Example 15: (comparative)

20.3 grams of R-PG, 0.2 gram of butylated hydroxytoluene and 0.1 gram of dibutyltin dilaurate were charged into a 1000 mL reactor. 59.40 grams of AOI-VM were added dropwise with dry air sparge and reacted for 2 hours at 55 to 60°C. 20.0 grams of ACMO was added in the mixture and the mixture was reacted for 2 hours at 60°C. The final resin was a clear colorless material with a viscosity of 560 mPa.s at 60°C. The final resin comprises 80% by weight of urethane acrylate and 20% by weight of ACMO. The urethane acrylate has a Mn of 1,240 g/mol.

Example 16

The above formulations were cured using the following process:
Each formulation (resin) was blended with 5% by weight of Irgacure 184 based on the weight of the polymerizable compounds. The blend was coated on a 100 μm PET film with #10 to #50 application wire rod. The coated substrate was cured on a UV curing unit equipped with a 400 to 1,000 mJ/$cm^2$ Hg lamp at a speed of 15 m/min.

| Example | Water tolerance value | Water solubility | Tensile stress at break (psi) | Tensile modulus (psi) | Elongation (%) | Pendulum hardness (s) |
|---|---|---|---|---|---|---|
| 1 (inv) | 5.05 | 3 | 11,220 | 397,650 | 10 | 187 |
| 2 (inv) | 5.80 | 4 | 10,020 | 360,550 | 12 | 183 |
| 3 (inv) | 6.95 | 4 | 9,450 | 325,900 | 15 | 196 |
| 4 (inv) | 8.69 | 4 | 1,310 | 4,970 | 126 | 57 |
| 5 (inv) | 14.95 | 4 | 490 | 1,860 | 96 | 45 |
| 6 (inv) | 8.28 | 4 | 8,700 | 277,030 | 13 | 187 |
| 7 (inv) | 12.65 | 4 | 440 | 1,600 | 88 | 45 |
| 8 (inv) | 13.75 | 4 | 390 | 2,430 | 51 | 75 |
| 9 (inv) | 14.70 | 4 | 400 | 1,500 | 84 | 42 |
| 10 (inv) | 18.30 | 4 | 285 | 720 | 72 | 33 |
| 11 (inv) | 10.49 | 4 | 7,340 | 244,050 | 12 | 196 |
| 12 (comp) | 4.12 | 2 | 6,220 | 267,500 | 6 | 180 |
| 13 (comp) | 4.28 | 2 | 4,040 | 36,300 | 55 | 70 |

(continued)

| Example | Water tolerance value | Water solubility | Tensile stress at break (psi) | Tensile modulus (psi) | Elongation (%) | Pendulum hardness (s) |
|---|---|---|---|---|---|---|
| 14 (comp) | 3.2 | 1 | 3,600 | 48,700 | 65 | 82 |
| 15 (comp) | 4.90 | 3 | 1,060 | 11,600 | 39 | 39 |

From the above data, we can conclude that the formulations according to the present invention (examples 1 to 11) make it possible to obtain cured products presenting a high hydrophilicity compared to that of comparative formulations (examples 12 to 15). The urethane (meth)acrylates based on polyethylene glycol mono(meth)acrylate as the hydroxy-functional (meth)acrylate have the highest hydrophilicity and good elongation. The urethane (meth)acrylates obtained with hydroxylalkyl (meth)acrylate as the hydroxy-functional (meth)acrylate have excellent mechanical properties.

## Claims

1. A urethane (meth)acrylate, wherein said product results from the reaction of:

   - at least one polyglycerin polyol;
   - at least one polyisocyanate; and
   - at least one hydroxy-functional (meth)acrylate.

2. The urethane (meth)acrylate according to claim 1, having a number average molecular weight from 1,000 to 50,000 g/mol, preferably from 1,500 to 10,000 g/mol, more preferably from 2,000 to 5,000 g/mol.

3. The urethane (meth)acrylate according to any one of claims 1 or 2, having residual hydroxy groups.

4. The urethane (meth)acrylate according to any one of claims 1 or 2, being devoid of hydroxy groups.

5. The urethane (meth)acrylate according to any one of claims 1 to 4, wherein the polyglycerin polyol is free of oxyethylene and/or oxypropylene groups, preferably free of oxyalkylene groups.

6. The urethane (meth)acrylate according to any one of claims 1 to 5, wherein the polyglycerin polyol has a number average molecular weight of at least 100 g/mol, preferably from 100 to 10,000 g/mol, and more preferably from 200 to 500 g/mol.

7. The urethane (meth)acrylate according to any one of claims 1 to 6, wherein the polyglycerin polyol has the following general formula (I) :

   (I) 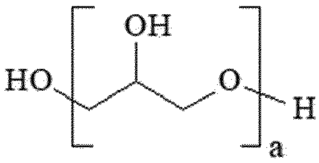

   wherein a is a number from 2 to 20, preferably from 2 to 10.

8. The urethane (meth)acrylate according to any one of claims 1 to 7, wherein the weight content of polyglycerin polyol units in the urethane (meth)acrylate is from 1 to 50% by weight, preferably 2 to 40% by weight, more preferably from 5 to 30% by weight, relative to the total weight of the urethane (meth)acrylate.

9. The urethane (meth)acrylate according to any one of claims 1 to 8, wherein the polyisocyanate is a diisocyanate preferably chosen from an aliphatic, a cycloaliphatic, or an aromatic diisocyanate, preferably a cycloaliphatic diisocyanate, and more preferably the polyisocyanate is isophorone diisocyanate.

10. The urethane (meth)acrylate according to any one of claims 1 to 9, wherein the weight content of polyisocyanate units in the urethane (meth)acrylate is from 10 to 70% by weight, preferably from 15 to 65% by weight, more preferably from 20 to 60% by weight, relative to the total weight of the urethane (meth)acrylate.

11. The urethane (meth)acrylate according to any one of claims 1 to 10, wherein the hydroxy-functional (meth)acrylate is chosen from a hydroxyalkyl (meth)acrylate and a polyethylene glycol mono(meth)acrylate, preferably 2-hydroxyethyl (meth)acrylate or a polyethylene glycol mono(meth)acrylate comprising 2 to 20, preferably 5 to 10, ethylene glycol units.

12. The urethane (meth)acrylate according to any one of claims 1 to 11, wherein the weight content of hydroxy-functional (meth)acrylate units in the urethane (meth)acrylate is from 20 to 80% by weight, preferably from 25 to 75% by weight, more preferably from 30 to 75% by weight, relative to the total weight of the urethane (meth)acrylate

13. The urethane (meth)acrylate according to any one of claims 1 to 12, having the following general formula (III) :

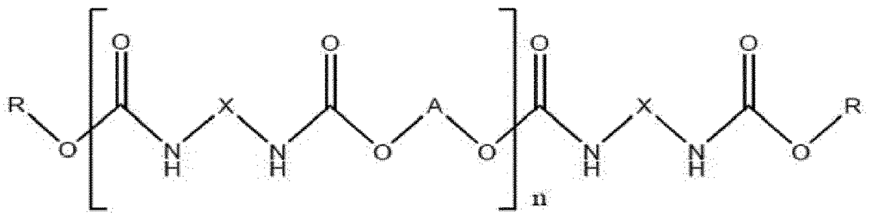

(III)

wherein:

- R is a unit deriving from the hydroxy-functional (meth)acrylate, preferably R has the following general formula (IV):

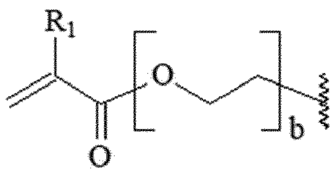

(IV)

wherein:

- $R_1$ is chosen from a hydrogen atom and a methyl group; and
- b is a number from 1 to 30, preferably from 1 to 10;

- X is a unit deriving from the polyisocyanate, said unit being optionally substituted by a urethane (meth)acrylate group if the polyisocyanate has a NCO functionality that is higher than 2;
- A is a unit deriving from the polyglycerin polyol, preferably A has the following general formula (V):

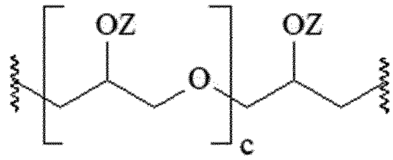

(V)

wherein:

- each Z is independently chosen from a hydrogen atom or the group -C(=O)-NH-X-NH-C(=O)-OR; and
- c is a number from 1 to 19, preferably from 1 to 9;

- n is a number from 1 to 30.

**14.** The urethane (meth)acrylate according to any one of claims 1 to 13, having an OH value from 50 mg KOH/g to 400 mg KOH/g, preferably from 100 mg KOH/g to 200 mg KOH/g.

**15.** The urethane (meth)acrylate according to any one of claims 1 to 14, wherein the ratio $R^1$ of the polyisocyanate to the hydroxy-functional (meth)acrylate is from 0.2 to 0.9, preferably from 0.5 to 0.8; and/or wherein the ratio $R^2$ of the polyglycerin polyol to the polyisocyanate is from 0.1 to 0.8, preferably from 0.2 to 0.5.

**16.** A method for obtaining a urethane (meth)acrylate comprising the successive following steps of:

- reacting a polyisocyanate with a hydroxy-functional (meth)acrylate to form an isocyanate-functional adduct; and
- reacting the isocyanate-functional adduct with a polyglycerin polyol to obtain a urethane (meth)acrylate.

**17.** A curable composition comprising:

- the urethane (meth)acrylate according to any one of claims 1 to 15 or obtained according to the process of claim 16;
- an ethylenically unsaturated compound chosen from an ethylenically unsaturated monomer or an ethylenically unsaturated oligomer, wherein the ethylenically unsaturated compound is preferably chosen from a mono- or multi-functional (meth)acrylic monomer or oligomer, more preferably chosen from acryloyl morpholine and polyethylene glycol di(meth)acrylate.

**18.** The curable composition according to claim 17, wherein the ethylenically unsaturated compound is present at an amount of at least 5% by weight, preferably from 5 to 99% by weight, more preferably from 10 to 50% by weight and even more preferably from 15 to 35% by weight, relative to the total weight of the curable composition.

**19.** A cured product resulting from the curing of a urethane (meth)acrylate according to any one of claims 1 to 15, or from the curing of a curable composition according to claim 17 or 18.

Europäisches Patentamt
European Patent Office
Office européen des brevets

# EUROPEAN SEARCH REPORT

Application Number
EP 21 30 6549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 046483 A (DAINIPPON INK & CHEMICALS) 25 March 2021 (2021-03-25)<br>* the whole document *<br>----- | 1-19 | INV.<br>C08F290/06<br>C08G18/48<br>C08G18/32<br>C08G18/67<br>B33Y70/00<br>C08G18/24<br>C08G18/75<br>C08G18/81<br>C09D175/16<br>C09J175/16 |
| A | US 2017/240751 A1 (MORIKAWA TAKASHI [JP] ET AL) 24 August 2017 (2017-08-24)<br>* paragraphs [0003], [0020], [0028] - [0047] *<br>* paragraphs [0159] - [0175], [0181] - [0200]; examples 1-4; table 1 *<br>----- | 1-19 | |
| A,D | JP 2016 186034 A (NEOS KK) 27 October 2016 (2016-10-27)<br>* the whole document *<br>----- | 1-19 | |

TECHNICAL FIELDS SEARCHED (IPC)

C08F
C08G
B33Y
C09D
C09J

The present search report has been drawn up for all claims

1

| Place of search | Date of completion of the search | Examiner |
|---|---|---|
| Munich | 12 April 2022 | Neugebauer, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 30 6549

This annex lists the patent family members relating to the patent documents cited in the above-mentioned European search report. The members are as contained in the European Patent Office EDP file on
The European Patent Office is in no way liable for these particulars which are merely given for the purpose of information.

12-04-2022

| Patent document cited in search report | Publication date | Patent family member(s) | Publication date |
|---|---|---|---|
| JP 2021046483 A | 25-03-2021 | NONE | |
| US 2017240751 A1 | 24-08-2017 | CN 107097414 A | 29-08-2017 |
| | | JP 6672874 B2 | 25-03-2020 |
| | | JP 2017148962 A | 31-08-2017 |
| | | US 2017240751 A1 | 24-08-2017 |
| JP 2016186034 A | 27-10-2016 | JP 6416680 B2 | 31-10-2018 |
| | | JP 2016186034 A | 27-10-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018178071 A
- JP 2016186034 A
- EP 2013302 B1
- US 2004259970 A1
- WO 2014126830 A
- WO 2014126834 A
- WO 2014126837 A

### Non-patent literature cited in the description

- **TUMBLESTON et al.** ontinuous Liquid Interface Production of 3D Objects,. *Science,* 20 March 2015, vol. 347 (6228), 1349-1352